# EUROPÄISCHE PATENTSCHRIFT

(11) **EP 0 919 279 B1**
(45) Veröffentlichungstag und Bekanntmachung des Hinweises auf die Patenterteilung: **03.01.2007**
(21) Anmeldenummer: 98121816.7
(22) Anmeldetag: 17.11.1998
(51) Int. Cl.: B01J 2/06, F25C 1/00

(54) **Verfahren und Vorrichtung zum Pelletieren oder Granulieren eines flüssigen oder pastösen Stoffes**
Process and device for pelletizing or granulating liquid or pasty material
Procédé et dispositif à granuler pour produit liquide ou pâteux

(30) Priorität: 27.11.1997 DE 19752465; 19.08.1998 DE 19837600
(43) Veröffentlichungstag der Anmeldung: 02.06.1999
(73) Patentinhaber: Air Liquide Deutschland GmbH, 40235 Düsseldorf (DE); Messer Group GmbH, 65843 Sulzbach (DE)
(72) Erfinder: Kosock, Stefan, 47805 Krefeld (DE); Hoffmanns, Wolfgang, 47877 Willich (DE)
(74) Vertreter: Kahlhöfer, Hermann

(56) Entgegenhaltungen:
- EP-A- 0 505 222
- EP-A- 0 605 147
- WO-A-87/04903
- US-A- 3 228 838
- US-A- 4 655 047

## Beschreibung

Die Erfindung betrifft ein Verfahren und eine Vorrichtung zum Pelletieren oder Granulieren eines flüssigen oder pastösen Stoffes in einem verflüssigten, tiefsiedenden Kühlmittel, wobei der Stoff in einen Strom des Kühlmittels eingetragen und zusammen mit dem Kühlmittel einer Trennvorrichtung zugeführt wird, in welcher der Stoff vom Kühlmittel getrennt und dieses wieder in den Verfahrenskreislauf zurückgeführt wird.

Ein Verfahren und eine Vorrichtung dieser Art ist aus der US 4,655,047 bekannt. Pellets von Flüssigei werden erzeugt, indem durch eine Düse das Flüssigei in einen Flüssigkeitsstrom einer cryogenen Flüssigkeit, der über eine schräge Wanne läuft, getropft wird und der Flüssigkeitsstrom mit den erzeugten Pellets zu einem Rüttelsieb führt. Die cryogene Flüssigkeit wird zurückgeführt und die Pellets über das Sieb in einen Sammelbehälter befördert. Die Vorrichtung ist im Bereich des Rüttelsiebes und des Sammelbehälters nicht mehr isoliert. Das Verfahren setzt voraus, daß die Pellets durchgefroren sind, bevor sie auf das Sieb treffen, da sonst die Pellets beschädigt werden. Die Fließmittelstrecke muß daher relativ groß bemessen sein, um eine Verweilzeit zu erreichen, die zu durchgefrorenen Pellets führt.

Aus der WO 87/04903 ist eine Gefriervorrichtung bekannt, in der aus einem flüssigen Stoff gefrorene Partikel durch direkten Kontakt mit flüssigem Stickstoff hergestellt werden. Die gefrorenen Partikel werden mittels einer archimedischen Schraube abtransportiert und dabei weiter mit einem kalten Gasstrom umspült, der jedoch nur einen relativ geringen Beitrag zum gesamten Gefriervorgang leisten kann.

Aus der EP 0 505 222 A1 ist auch der Weitertransport von gefrorenen Partikeln auf einem Transportband bekannt, jedoch findet während des Transportes auf dem Band nur eine Kühlung in geringem Maße statt.

Der Erfindung liegt die Aufgabe zugrunde, ein Verfahren und eine Vorrichtung zur Herstellung von Pellets bereitzustellen, mit dem sich großvolumige Pellets oder Granulatkörner problemlos mit hoher Ausbeute herstellen lassen und die Nachteile bekannter Verfahren vermieden werden.

Zur Lösung dieser Aufgabe dienen eine Vorrichtung mit den Merkmalen von Anspruch 1 und ein Verfahren mit den Merkmalen von Anspruch 11

Vorteilhafte Ausgestaltungen der Erfindung sind in den Unteransprüchen angegeben.

Der zu pelletierende Stoff ist in der Regel flüssig oder pastös. Beispiele sind flüssige oder pastöse Zubereitungen für die Herstellung von Eiskrem oder anderer Lebensmittel.

Die Vorrichtung enthält einen Vorratsbehälter für ein flüssiges Kühlmittel, eine Fördereinrichtung für das Kühlmittel, eine Eintragsvorrichtung für den zu pelletierenden Stoff, eine Fließstrecke mit dem flüssigen Kühlmittel (z. B. eine Rinne oder flache Wanne), eine Einrichtung zur Kühlmittelrückführung zum Vorratsbehälter (z. B. Rückführrinne) und eine Fördereinrichtung, nämlich ein Förderband zum Ausgefrieren und Transportieren der Pellets. Die Pellets werden in oder auf dem Förderband mit Hilfe eines gasförmigen Kühlmittels, welches in Bewegungsrichtung des Förderbandes strömt, ausgefroren.

Das flüssige Kühlmittel ist vorzugsweise eine cryogene Flüssigkeit wie kälteverflüssigte Gase, insbesondere kälteverflüssigter Stickstoff (LN₂).

Gasförmige Kühlmittel sind beispielsweise kalter Stickstoff, kalte Luft, kalte Edelgase wie Helium oder Argon oder kaltes Kohlendioxidgas. Das gasförmige Kühlmittel hat vorzugsweise eine Temperatur im Bereich von minus 196 °C bis 0 °C, besonders bevorzugt von minus 196 °C bis minus 40 °C. Das gasförmige Kühlmittel wird vorzugsweise mit Hilfe des flüssigen Kühlmittels auf die Temperatur gekühlt oder aus dem flüssigen Kühlmittel gebildet (z. B. abdampfendes Kühlmittel). Z. B. ist das gasförmige Kühlmittel kaltes Stickstoffgas, gebildet aus flüssigem Stickstoff als flüssigem Kühlmittel, oder ein Gemisch von kaltem Stickstoffgas mit Luft. Besonders bevorzugt wird die kalte Atmosphäre, die in der Vorrichtung, insbesondere im Bereich des Vorratsgefäßes für flüssiges Kühlmittel, im Bereich der Fließrinne und im Bereich der Rückführeinrichtung für flüssiges Kühlmittel entsteht, als gasförmiges Kühlmittel verwendet. Die kalte Atmosphäre wird auch als Abluft bezeichnet.

Ein Förderband dient erfindungsgemäß als Fördereinrichtung für die Pellets zu einem Sammelgefäß oder Sammelbehälter. Das Förderband erlaubt einen schonenden Transport von noch nicht ausgefrorenen Pellets, die mechanisch leicht beschädigt oder verformt werden. Das Transportband des Förderbandes ist vorzugsweise aus einem für das flüssige Kühlmittel durchlässigen Material, z. B. ein netzförmiges Band, gitterförmiges Band oder ein gelochtes Band. Das Transportband besteht beispielsweise aus beweglichen Gliedern aus. Das Förderband ist ein Förderband mit ebenem Förderweg.

Das Transportband besteht beispielsweise aus rostfreiem Stahl. Der Förderweg, das ist bei einem Förderband mit ebenem Förderweg die Länge des Förderbandes (der Fördereinrichtung), liegt in der Regel im Bereich von 2 bis 3 Meter, insbesondere bei 2 bis 2,5 Meter.

Das vollständige Gefrieren oder Ausgefrieren der Teilchen oder Pellets auf oder in der Fördereinrichtung, insbesondere auf dem Förderband, erfolgt durch Kühlung mit gasförmigem Kühlmittel, vorzugsweise der kalten Abluft. Das gasförmige Kühlmittel wird mit den vollständig zu gefrierenden (auszufrierenden) Teilchen oder Pellets in Kontakt gebracht. Vorteilhaft wird ein Strom des gasförmigen Kühlmittels über die auszufrierenden Pellets geführt. Der Strom von gasförmigem Kühlmittel wird beispielsweise mit Hilfe einer Gasabzugseinrichtung erzeugt. Die Gasabzugseinrichtung kann z. B. mit einem Abzugsventilator aufgebaut werden.

Die Vorrichtung ist vorzugsweise nicht nur im Einsatzbereich des flüssigen Kühlmittels (Kühlmittelvorratsbehälter, Fließstrecke) wärmeisoliert, sondern auch im Bereich der Fördereinrichtung. Besonders vorteilhaft wird ein Förderband mit einer tunnelartigen Wärmeisolierung (wärmeisoliertes Gehäuse) als Fördereinrichtung eingesetzt. Durch eine tunnelartige, wärmeisolierende Einhausung des Förderbandes, wird ein Gaskanal gebildet, durch den das gasförmige Kühlmittel geleitet wird. Der Gaskanal enthält das Forderband mit ebenem Förderweg. Das gasförmige Kühlmittel kann aber auch durch entsprechende Maßnahmen so geführt werden, daß ein Gaskanal (genannt primärer Gaskanal) entsteht, der in der Höhe z. B. durch die Oberfläche des Transportbandes des Förderbandes und dem wärmeisolierten Gehäuse begrenzt wird. Die Höhe des primären Gaskanales liegt beispielsweise im Bereich von 2 bis 30 cm, bevorzugt 2 bis 10, insbesondere 2 bis 5 cm. Durch die Höhe des Gaskanales, insbesondere des primären Gaskanales, wird die Geschwindigkeit des Gasstromes des gasförmigen Kühlmittels (z. B. der kalten Abluft) im Gaskanal beeinflußt. Hohe Geschwindigkeiten des Gasstromes sind für die Kühlung des Fördergutes (der Pellets) vorteilhaft. Die Geschwindigkeit des Gasstromes des gasförmigen Kühlmittels liegt beispielsweise im Bereich von 1 bis 50 Meter pro Sekunde, vorzugsweise bei 10 bis 30 Meter pro Sekunde, besonders bevorzugt bei 15 bis 25 Meter pro Sekunde.

Bei einer Vorrichtung und einem Verfahren nach der Erfindung wird der zu pelletierende Stoff in einen laminaren Strom des flüssigen Kühlmittels an einer Stelle stromabwärts von einer das Kühlmittel fördernden Pumpe eingetragen, wobei dafür gesorgt ist, daß die Strömung an der Eintragsstelle laminar ist. Der Eintrag des in der Regel flüssigen oder pastösen Stoffes erfolgt beispielsweise wie in US 4,655,047 beschrieben, worauf hiermit Bezug genommen wird. Der eingetragene Stoff wird in einer laminaren Kühlmittel-Strömungsstrecke auf einer Fließrinne oder in einer flachen Wanne nur teilweise gefroren (angefroren), um die in der Regel kugelige Form des eingetragenen Stoffes zu fixieren. Es wird vorzugsweise nur eine Art feste Hülle gebildet. Das vollständige Ausfrieren der aus dem Stoff gebildeten Teilchen (Pellets) erfolgt erst aufdem Förderband mit Hilfe von gasförmigem Kühlmittel.

Vorteilhaft bilden Wärmeisolation der Pelletiervorrichtung und des Förderbandes, eine Einheit, z. B. durch ein einheitliches oder zusammenhängendes wärmeisoliertes Gehäuse.

Auf diese Weise lassen sich großvolumige Pellets des einzufrierenden Stoffes erzeugen. Eine hohe Ausbeute an großvolumigen Pellets wird sichergestellt. Durch die Nutzung der Kälte des entstehenden kalten Abgases während des Betriebes der Vorrichtung kann die Vorrichtung kompakter gebaut und Energie eingespart werden.

Die Erfindung wird im folgenden anhand der Zeichnungen Fig. 1 bis Fig. 4 an Ausführungsbeispielen mit weiteren Einzelheiten näher erläutert.

Die Fig. 1 zeigt einen Vertikalschnitt durch eine erfindungsgemäße Vorrichtung.

Fig. 2. zeigt schematisch (Draufsicht) Teile einer erfindungsgemäßen Vorrichtung mit mehreren Fließrinnen, die quer zur Förderrichtung eines Förderbandes angeordnet sind. Nicht gezeigt wird das wärmeisolierende Gehäuse von Fließrinnen und Förderband. Die eingezeichneten Pfeile deuten die Fließrichtung in den Fließrinnen und die Förderbewegungsrichtung des Förderbandes an.

Die Fig. 3 zeigt ein Schema (Vertikalschnitt) einer erfindungsgemäßen Vorrichtung, wobei nur besondere Teile und deren Anordnung abgebildet sind. Die eingezeichneten Pfeile deuten die Fließrichtung in den Fließrinnen und die Förderbewegungsrichtung des Förderbandes an.

Fig. 4. zeigt schematisch (Draufsicht) Teile einer erfindungsgemäßen Vorrichtung mit einer Fließrinne mit abgeschrägtem Ende. Nicht gezeigt wird das wärmeisolierende Gehäuse von Fließrinne und Förderband. Die eingezeichneten Pfeile deuten die Fließrichtung in der Fließrinne und die Förderbewegungsrichtung des Förderbandes an.

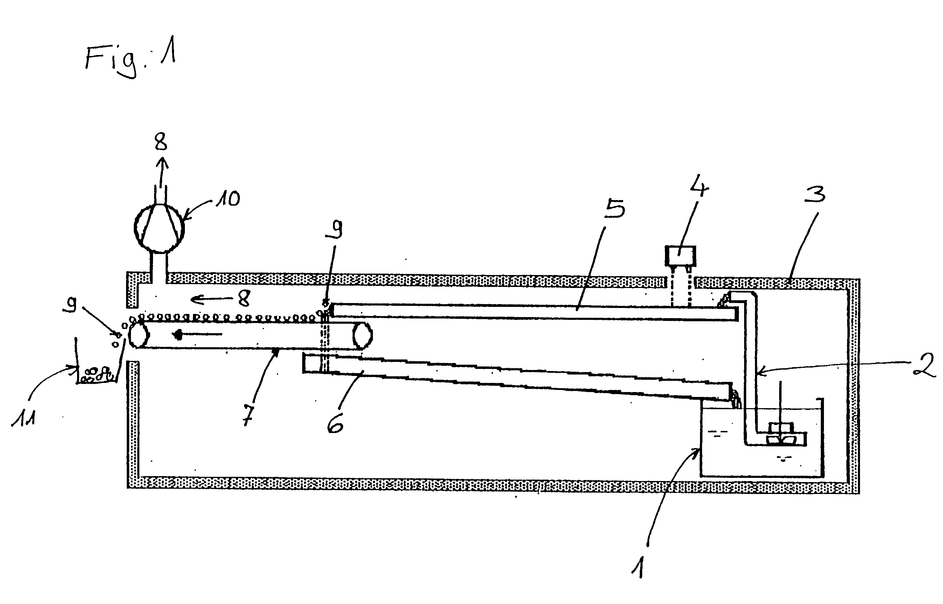

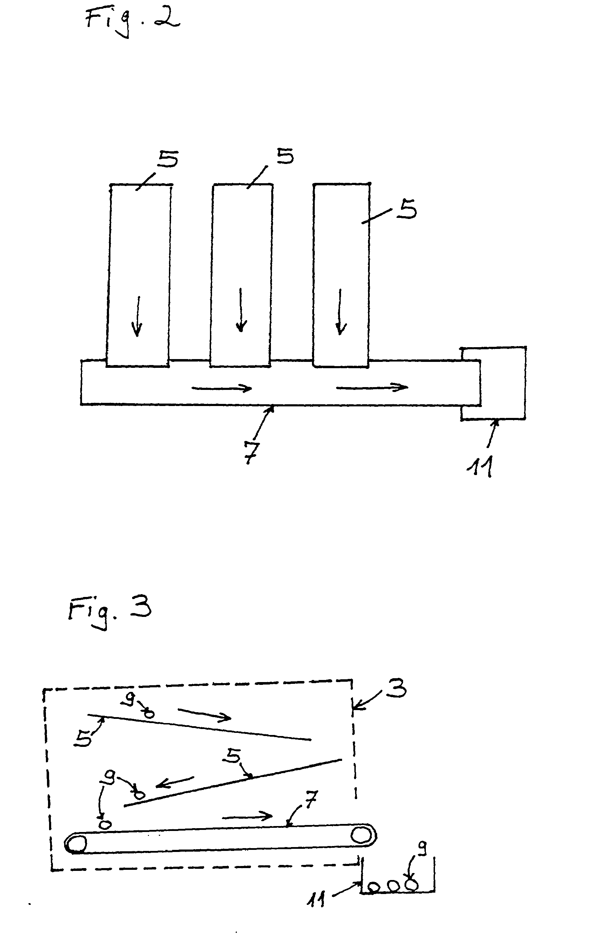

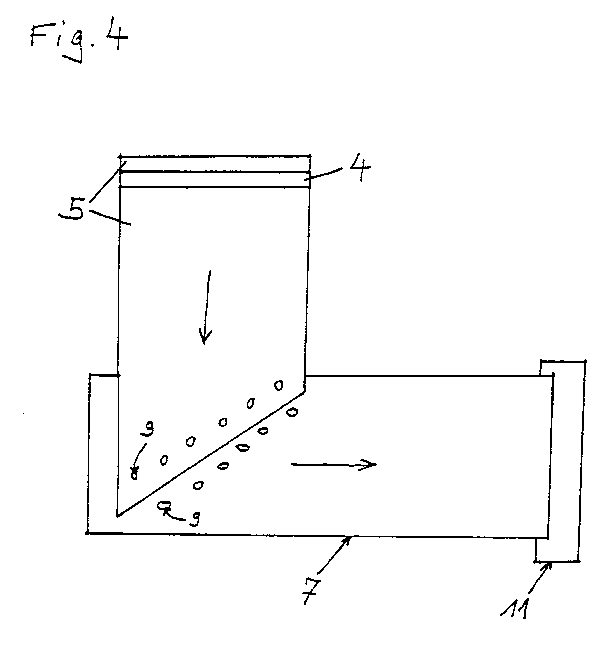

In Fig. 1 ist eine gesamte Vorrichtung zur Pelletierung von in der Regel flüssigen oder pastösen Stoffen schematisch abgebildet. In einem wärmeisolierten Gehäuse 3 befindet sich ein Vorratsbehälter 1 für ein tiefsiedendes, verflüssigtes Kältemittel (vorzugsweise Flüssigstickstoff; LN₂), dessen Füllstand mittels einer Füllstandsmessung kontrolliert und automatisch aus einem Vorratstank nachgefüllt wird. Mittels einer Pumpe 2 wird das verflüssigte, tiefsiedende Kältemittel aus dem Vorratsbehälter 1 über eine nach oben offene, horizontal oder schräg nach unten angeordnete Rinne 5 derart gefördert, daß auf der Rinne 5 ein laminarer Strom des Kühlmittels entsteht. Stromabwärts der Pumpe 2 befindet sich oberhalb des Kühlmittelstromes auf der Rinne 5 eine Eintragsvorrichtung 4 für den zu pelletierenden Stoff. Die Eintragsvorrichtung 4 ist also im Bereich des dem Vorratsbehälter 1 zugewandten Endes der Rinne 5 angeordnet. Die Eintragsvorrichtung 4 besitzt in der Regel mindestens eine Düse. Der Stoff wird hier in den Kühlmittelstrom eingetropft und mit dem Kühlmittelstrom zum anderen Ende der Rinne 5 mitbewegt. Die Wegstrecke des Kühlmittelstroms beziehungsweise die Länge der Rinne 5 ist so bemessen, daß das flüssige Kühlmittel dem zu pelletierenden Stoff genau so viel Energie entzieht, daß die äußere Hülle der Pellets 9 angefroren, der Kern aber noch flüssig ist. Hierbei verdampft ein Teil des Kühlmittels. Am unteren Ende der Rinne 5 wird der gemeinsame Strom von restlichem flüssigem Kühlmittel und halbgefrorenen Pellets auf ein Förderband 7 geleitet. Dieses Förderband 7 ist so beschaffen, daß das restliche flüssige Kühlmittel durch das Band des Förderbandes hindurchläuft, aber die angefrorenen Pellets auf dem Förderband 7 liegen bleiben und von dem Förderband 7 weitertransportiert werden. Das restliche Kühlmittel wird mittels einer Rücklaufrinne 6 in den Vorratsbehälter 1 zurückbefördert. Die Rinnen 5, 6 und das Förderband 7 sind durch ein wärmeisolierendes Gehäuse 3 derart eingehaust, daß mittels eines am Ende des Förderbandes 7 installierten Abgasventilators 10 das gesamte in der Anlage angefallene verdampfte flüssige Kühlmittel oberhalb des Förderbandes 7 im Gleichstrom mit der Transportrichtung der Pellets angesaugt wird, das heißt die Richtung der Strömung des gasförmigen Kühlmittels 8 (Abluft) entspricht der Transportrichtung der Pellets auf dem Förderband 7. Das gasförmige Kühlmittel entzieht dabei beim Durchströmen dieser Wegstrecke den Pellets weiterhin Energie und erwärmt sich dabei. Die Bandlänge und Geschwindigkeit des Förderbandes und die Strömungsverhältnisse des verdampfenden Kältemittelstromes sind dabei so gewählt, daß die Pellets am Ende des Förderbandes vollständig durchgefroren sind. Das Förderband 7 kann dabei in Linie zur Pelletierrine 5, rücklaufend oder querab angeordnet sein. Bei einer Anordnung querab ist die gemeinsame Nutzung eines abfördernden Bandes 7 für mehrere Rinnen möglich (Fig. 2). Ferner ist eine Aufteilung der Rinne 5 in mehrere kürzere Rinnen (Fig. 3), auf denen der flüssige Kühlmittelstrom/Pelletstrom hin- und zurückfließt vorteilhaft, z. B. für eine raumsparende Bauweise.

Fig. 4 zeigt eine Draufsicht einer Vorrichtung mit einer Fließrinne mit abgeschrägtem Ende, wobei nur besondere Teile abgebildet sind. Über einen sogenannten Tropfbalken als Eintragsvorrichtung 4 mit einer Reihe von mehreren Düsen gelangen Tropfen des zu pelletierenden Stoffes auf die Fließrinne 5, wobei die kugeligen Tropfen im äußeren Bereich (im Bereich der Oberfläche) gefrieren ("angefrorene" Teilchen oder Pellets). Die Fließrinne 5 ist an dem dem Förderband 7 zugewandten Ende in der Fläche abgeschrägt, so daß die angefrorenen Pellets nicht auf einer Linie auf das Förderband 7 gelangen, sondern über die Breite des Förderbandes verteilt.
Folgende Werte haben sich beispielsweise dabei für eine Vorrichtung (Anlage) mit einer Kapazität von ca. 300 kg Pellets ergeben. Gefroren wird beispielsweise eine wässerige Suspension mit einem Feststoffanteil von 5 % zu Pellets von einem Durchmesser von ca. 6 mm. Als flüssiges Kühlmittel dient flüssiger Stickstoff. Die Strömungsgeschwindigkeit auf der Rinne 5 beträgt dabei 0,5 Meter pro Sekunde. Die Rinne besitzt dabei eine Breite von 1 Meter und eine Länge von 3 Meter. Der Verbrauch an flüssigem Stickstoff beträgt 2,4 kg/kg Produkt (Pellets). Die Verweilzeit der Pellets auf dem Förderband beträgt vorzugsweise 30 Sekunden. Längere Verweilzeiten führen in der Regel zum gleichen Ergebnis. Die Kerntemperatur der Pellets am Ende des Förderbandes (Ende zum Sammelbehälter 11) beträgt -20° C. Die Temperatur des Stickstoffgases (Abgas) am Ende der Rinne 5 beträgt ca. -185° C. Unmittelbar vor dem Abgasventilator 10 beträgt die Temperatur des Stickstoffgases -40° C.

### Bezugzeichenliste

- 1: Vorratsbehälter für cryogene Flüssigkeit (Flüssigstickstoff; LN₂)
- 2: Fördereinrichtung für cryogene Flüssigkeit (Pumpe für LN₂)
- 3: wärmeisolierendes Gehäuse
- 4: Eintragsvorrichtung für den zu pelletierenden Stoff (z. B. Tropfbalken)
- 5: Fließrinne oder Wanne für cryogene Flüssigkeit
- 6: Rücklaufrinne für cryogene Flüssigkeit
- 7: Förderband mit ebenem Förderweg
- 8: Abgas
- 9: Pellet
- 10: Abgasabzug (Abgaspumpe)
- 11: Sammelbehälter für fertige (ausgefrorene) Pellets

## Patentansprüche

1. Vorrichtung zum Pelletieren oder Granulieren eines flüssigen oder pastösen Stoffes mit einem flüssigen Kühlmittel, enthaltend eine Pumpe (2) für das flüssige Kühlmittel, eine Fließstrecke für das flüssige Kühlmittel, eine Eintragsvorrichtung (4) für den zu pelletierenden oder zu granulierenden Stoff, eine Rückführeinrichtung (6) für das flüssige Kühlmittel und einen Gaskanal für einen Gasstrom eines gasförmigen Kühlmittels, wobei in dem Gaskanal ein Förderband mit ebenem Förderweg (7) vorhanden ist und wobei die Bewegungsrichtungen von Förderband mit ebenem Förderweg (7) und Gasstrom gleich sind.

2. Vorrichtung nach Anspruch 1, **dadurch gekennzeichnet, dass** das Förderband (7) für das flüssige Kühlmittel durchlässig ist.

3. Vorrichtung nach Anspruch 2, **dadurch gekennzeichnet, dass** am Ende des Förderbandes ein Abgasventilator (10) installiert ist.

4. Vorrichtung nach einem der Ansprüche 1 bis 3, **dadurch gekennzeichnet, dass** das flüssige Kühlmittel ein kälteverflüssigtes Gas oder Gasgemisch ist.

5. Vorrichtung nach einem der Ansprüche 1 bis 4, **dadurch gekennzeichnet, dass** gasförmige Kühlmittel kalter Stickstoff, kalte Luft, kaltes Edelgas der kaltes Kohlendioxidgas ist.

6. Vorrichtung nach einem der Ansprüche 1 bis 4, **dadurch gekennzeichnet, dass** das gasförmige Kühlmittel kalte Abluft ist.

7. Vorrichtung nach einem der Ansprüche 1 bis 6, **dadurch gekennzeichnet, dass** die Fließstrecke mit dem flüssigen Kühlmittel eine Rinne (5) oder eine flache Wanne ist.

8. Vorrichtung nach Anspruch 7, **dadurch gekennzeichnet, dass** das Förderband (7) quer zu einer oder mehreren Rinnen (5) angeordnet ist.

9. Vorrichtung nach Anspruch 7 oder 8, **dadurch gekennzeichnet, dass** zwei oder mehrere Rinnen (5) kombiniert sind.

10. Vorrichtung nach einem der Ansprüche 1 bis 9, **dadurch gekennzeichnet, dass** das Förderband (7) mit einem tunnelartigen, wärmeisolierten Gehäuse eingehaust ist.

11. Verfahren zur Herstellung von Pellets oder Granulat aus flüssigen oder pastösen Stoffen mit Hilfe eines flüssigen Kühlmittels, wobei aus dem zu pelletierenden oder zu granulierenden Stoff in einem Flüssigkeitsstrom eines Kühlmittels, noch nicht durchgefrorene Teilchen hergestellt werden, die zu einem Förderband mit ebenem Forderweg (7) gebracht werden, wo die Teilchen auf dem Fördereinband (7) mit Hilfe eines gasförmigen im Gleichstrom strömenden Kühlmittels ausgefroren werden.

12. Verfahren nach Anspruch 11, **dadurch gekennzeichnet, dass** kalte Abluft als gasförmiges Kühlmittel mit Hilfe einer Abzugseinrichtung (10) durch einen Gaskanal geführt wird, der das Förderband (7) enthält.

13. Verwendung eines kalten im Gleichstrom strömenden Gasstromes zum Ausfrieren von Teilchen auf einem Förderband mit ebenem Förderweg (7) in einer Vorrichtung zum Pelletieren oder Granulieren eines flüssigen oder pastösen Stoffes mit einem flüssigen Kühlmittel.

## Claims

1. Apparatus for pelletizing or granulating a liquid or pasty substance with a liquid coolant, containing a pump (2) for the liquid coolant, a flow section for the liquid coolant, a feed apparatus (4) for the substance to be pelletized or granulated, a recycling device (6) for the liquid coolant and a gas duct for a gas flow of a gaseous coolant, wherein a conveyor belt (7) with plane conveying path is present in the gas duct and the motional directions of the conveyor belt (7) with plane conveying path and the gas flow are the same.

2. Apparatus according to Claim 1, **characterized in that** the conveyor belt (7) is permeable for the liquid coolant.

3. Apparatus according to Claim 2, **characterized in that** a waste-gas fan (10) is installed at the end of the conveyor belt.

4. Apparatus according to one of Claims 1 to 3, **characterized in that** the liquid coolant is a cold-liquefied gas or gas mixture.

5. Apparatus according to one of Claims 1 to 4, **characterized in that** gaseous coolant is cold nitrogen, cold air, cold inert gas or cold carbon dioxide gas.

6. Apparatus according to one of Claims 1 to 4, **characterized in that** the gaseous coolant is cold waste air.

7. Apparatus according to one of Claims 1 to 6, **characterized in that** the flow section containing the liquid coolant is a channel (5) or a flat trough.

8. Apparatus according to Claim 7, **characterized in that** the conveyor belt (7) is disposed transversely to one or more channels (5).

9. Apparatus according to Claim 7 or 8, **characterized in that** two or more channels (5) are combined.

10. Apparatus according to one of Claims 1 to 9, **characterized in that** the conveyor belt (7) is enclosed with a tunnel-like, heat-insulated housing.

11. Process for manufacturing pellets or granulate from liquid or pasty substances with the aid of a liquid coolant, wherein, from the substance to be pelletized or granulated in a liquid flow of a coolant, not yet frozen particles are produced, which are brought to a conveyor belt (7) with plane conveying path, where the particles on the conveyor belt (7) are frozen out with the aid of a gaseous coolant flowing in the parallel flow.

12. Process according to Claim 11, **characterized in that** cold waste air is guided as gaseous coolant, with the aid of an extractor (10), through a gas duct containing the conveyor belt (7).

13. Use of a cold gas flow, flowing in the parallel flow, for freezing out particles on a conveyor belt (7) with plane conveying path in an apparatus for pelletizing or granulating a liquid or pasty substance with a liquid coolant.

## Revendications

1. Dispositif pour la pelletisation ou pour la granulation d'une substance liquide ou pâteuse avec un agent réfrigérant liquide, contenant une pompe (2) pour l'agent réfrigérant liquide, une section d'écoulement pour l'agent réfrigérant liquide, un dispositif d'alimentation (4) pour la substance devant être pelletée ou granulée, une installation de recyclage (6) pour l'agent réfrigérant liquide et un canal de gaz pour un flux de gaz d'un agent réfrigérant gazeux, un convoyeur a courroie (7) avec un trajet convoyeur plan se trouvant dans le canal de gaz et dans quel cas les directions de mouvement du convoyeur à courroie (7) avec le trajet convoyeur plan et du flux de gaz sont identiques.

2. Dispositif selon la revendication 1, **caractérisé en ce que** le convoyeur à courroie (7) est perméable à l'agent réfrigérant liquide.

3. Dispositif selon la revendication 2, **caractérisé en ce qu'**un ventilateur de gaz résiduels (10) est installé à la fin du convoyeur à courroie.

4. Dispositif selon l'une des revendications 1 à 3, **caractérisé en ce que** l'agent réfrigérant liquide est un gaz ou un mélange de gaz liquéfié à froid.

5. Dispositif selon l'une des revendications 1 à 4, **caractérisé en ce que** l'agent réfrigérant gazeux est de l'azote froid, de l'air froid, du gaz inerte froid ou du gaz de dioxyde de carbone froid.

6. Dispositif selon l'une des revendications 1 à 4, **caractérisé en ce que** l'agent réfrigérant gazeux est de l'air évacué froid.

7. Dispositif selon l'une des revendications 1 à 6, **caractérisé en ce que** la section d'écoulement avec l'agent réfrigérant liquide est une cunette (5) ou un creux plat.

8. Dispositif selon la revendication 7, **caractérisé en ce que** le convoyeur a courroie (7) est agencé transversalement par rapport à une cunette ou à une pluralité de cunettes (5).

9. Dispositif selon la revendication 7 ou 8, **caractérisé en ce que** deux ou une pluralité de cunettes (5) sont/est combinée(s).

10. Dispositif selon l'une des revendications 1 à 9, **caractérisé en ce que** le convoyeur a courroie (7) est incorporé dans un boîtier à la façon d'un tunnel, isolé à la chaleur.

11. Procédé pour la fabrication de pellets ou de granulés à partir de substances liquides ou pâteuses à l'aide d'un agent réfrigérant liquide, dans quel cas à partir de la substance devant être pelletée ou granulée des particules n'étant pas encore surgelées complètement, sont produites dans un flux de liquide d'un agent réfrigérant, lesquelles particules sont amenées jusqu'à un convoyeur a courroie (7) avec un trajet convoyeur plan, où les particules sont surgelées complètement sur le convoyeur a courroie (7) à l'aide d'un agent réfrigérant gazeux s'écoulant en flux parallèle.

12. Procédé selon la revendication 11, **caractérisé en ce que** de l'air évacué froid est guidé en tant qu'agent réfrigérant gazeux à l'aide d'une installation d'extraction (10) à travers un canal de gaz, qui contient le convoyeur à courroie (7).

13. L'utilisation d'un flux de gaz froid s'écoulant en flux parallèle pour séparer par congélation des particules sur un convoyeur à courroie (7) avec un trajet convoyeur plan dans un dispositif à pelleter ou à granuler une substance liquide ou pâteuse avec un agent réfrigérant liquide.
